# EUROPEAN PATENT APPLICATION

(11) **EP 4 567 563 A1**
(43) Date of publication of application: **11.06.2025**
(21) Application number: 23865049.3
(22) Date of filing: 07.07.2023
(51) Int. Cl.: G06F 1/3287, B41J 29/13, B41J 29/38, G06F 1/3215, G06F 1/3231, H04N 1/00

(54) **ELECTRIC DEVICE**

(30) Priority: 15.09.2022 JP 2022147210
(71) Applicant: CANON KABUSHIKI KAISHA, Tokyo 146-8501 (JP)
(72) Inventor: UEKI, Hideyuki, Tokyo 146-8501 (JP); EZUMI, Yosuke, Tokyo 146-8501 (JP); OGUSHI, Takuhiro, Tokyo 146-8501 (JP); NISHIKAWA, Yukinori, Tokyo 146-8501 (JP); AIDA, Takahiro, Tokyo 146-8501 (JP)
(74) Representative: WESER & Kollegen Patentanwälte PartmbB
(86) International application number: PCT/JP2023/025228
(87) International publication number: WO 2024/057687

(57) **Abstract**

An electrical device includes detecting means for detecting a state of the electrical device, controlling means for acquiring a detection result of the detecting means and executing control based on the detection result, and holding means for holding the detection result of the detecting means as detection information. A power state of the controlling means includes a first state and a second state in which power consumption is higher than in the first state. The controlling means acquires the detection result in the second state and does not acquire the detection result in the first state, and in a case where the power state transitioned from the first state to the second state, the controlling means acquires the detection information stored in the holding means in the first state.

## Description

### TECHNICAL FIELD

The present invention relates to a power saving technology for an electrical device.

### BACKGROUND ART

In order to reduce the power consumption of an electrical device, a technology is known that enables the power state of the electrical device to transition between a normal state and a power saving state in which the power consumption is lower than that in the normal state. In the power saving state, the power consumption is reduced by not supplying power to at least some of the components of the electrical device or by restricting at least some of the functions of the components. Patent Document 1 discloses a first control unit provided with a reception unit that receives a detection result from a sensor that detects a state of an electrical device, and discloses a technique in which the first control unit acquires the detection result from a second control unit when in a power saving state. According to this technique, the power consumption of the first control unit is reduced by limiting the functionality of the reception unit in the power saving state, but the first control unit can recognize the detection result of the sensor even when in the power saving state.

### CITATION LIST

### PATENT LITERATURE

PTL1: Japanese Patent Laid-Open No. 2022-10638

### SUMMARY OF INVENTION

### TECHNICAL PROBLEM

However, with the technique of Patent Document 1, even in the power saving state, the first control unit communicates with the second control unit to obtain the detection result of the sensor, and there is room for improvement in terms of reducing the power consumption of the first control unit.

The present invention provides a technology that makes it possible to recognize a state of an electrical device while also reducing power consumption.

### SOLUTION TO PROBLEM

According to the present invention, there is provided an electrical device comprising:
detecting means for detecting a state of the electrical device;
controlling means for acquiring a detection result of the detecting means and executing control based on the detection result; and
holding means for holding the detection result of the detecting means as detection information,
wherein a power state of the controlling means includes a first state and a second state in which power consumption is higher than in the first state, and
the controlling means acquires the detection result in the second state and does not acquire the detection result in the first state, and in a case where the power state transitioned from the first state to the second state, the controlling means acquires the detection information stored in the holding means in the first state.

### ADVANTAGEOUS EFFECTS OF INVENTION

According to the present invention, it is possible to provide a technology that makes it possible to recognize a state of an electrical device while also reducing power consumption.

### BRIEF DESCRIPTION OF DRAWINGS

FIG. 1 is an external view of an electrical device according to an embodiment of the present invention.
FIG. 2 is an illustrative diagram showing an internal mechanism of the electrical device of FIG. 1.
FIG. 3 is a block diagram of a control unit of the electrical device of FIG. 1.
FIG. 4 is an illustrative diagram of operations when the power is turned on.
FIG. 5 is an illustrative diagram of operations when a power key is operated.
FIG. 6 is an illustrative diagram of operations when the power key is operated.
FIG. 7 is a block diagram of a processing circuit.
FIG. 8A is a flowchart showing an example of control related to the processing circuit.
FIG. 8B is a flowchart showing an example of control related to the processing circuit.
FIG. 9 is a timing chart showing an example of changes in detection results, detection information, input information, and the like.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### <Overview of Electrical Device>

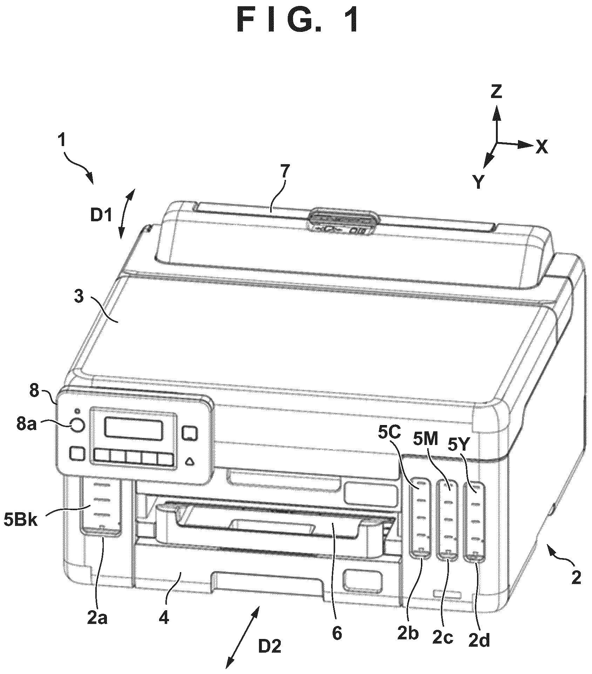

FIG. 1 is an external view of an electrical device 1 according to an embodiment of the present invention, as viewed from the front side. The electrical device 1 of the present embodiment is an inkjet printing apparatus that ejects liquid ink to perform printing on a printing medium, but the present invention is also applicable to various electrical devices other than inkjet printing apparatuses. In the figures, arrows X and Y indicate horizontal directions that are orthogonal to each other, and an arrow Z indicates the up-down direction (the direction of gravity). The X direction is the width direction (left-right direction) of the electrical device 1. The Y direction is the depth direction of the electrical device 1.

Note that "printing" includes not only formation of significant information such as a character or graphic pattern but also formation of an image, design, or pattern on print media in a broader sense and processing of print media regardless of whether the information is significant or insignificant or has become obvious to allow human visual perception. Also, in this embodiment, "printing medium" is assumed to be sheet-shaped paper but may be a fabric, a plastic film, or the like.

The electrical device 1 has a flattened rectangular parallelepiped shape as a whole, and includes an apparatus body 2, a cover 3, and a cassette-type stacking portion 4. The cover 3 is provided so as to cover the upper portion of the apparatus body 2 and constitutes the top portion of the electrical device 1. The cover 3 is a movable portion that can be operated by a user, and can be opened and closed in the direction of an arrow D1. FIG. 1 shows the cover 3 in a closed state. When the cover 3 changes to an open state, the internal mechanism of the apparatus body 2 can be exposed to the outside for maintenance or the like. The stacking portion 4 is a tray on which printing media are stacked, and is a movable portion that can be operated by the user and can be pulled out from and mounted in (pushed into) the apparatus body 2 in the direction of an arrow D2. A discharge portion 6, which is for discharging a printing medium on which printing was performed, is formed at the front of the electrical device 1. An operation unit 8 that accepts operations performed by a user is also provided at the front of the electrical device 1. The operation unit 8 has a touch panel type of display unit and a power key 8a. In the present embodiment, the power key 8a is a push button type of switch. By operating the power key 8a, the user can issue a power-on instruction and a power-off instruction to the electrical device 1.

A housing forming the outer walls of the apparatus body 2 has a plurality of window portions 2a to 2d. A user can visually check the internal configuration of the apparatus body 2 through the window portions 2a to 2d. In the present embodiment, the user can visually check the remaining amount of liquid contained in containers 5Bk, 5C, 5M, and 5Y (hereinafter, simply called the containers 5 when collectively referred to or when no distinction is made between them) through window portions 2a to 2d. The containers 5 are ink tanks that contain liquid ink, and different types of ink are contained in the four containers 5. In the case of the present embodiment, the container 5Bk contains black ink, the container 5C contains cyan ink, the container 5M contains magenta ink, and the container 5Y contains yellow ink. Also, the number of types of ink is not limited to four as in the present embodiment, and may be one type or a number of types other than four types, and the number of containers 5 need only be greater than or equal to the number of types of liquid ink.

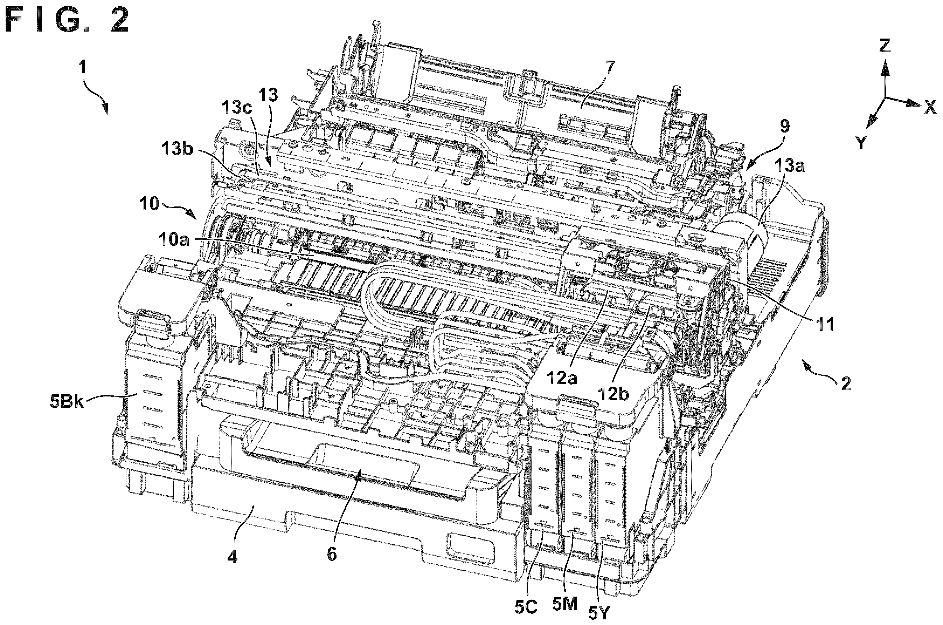

FIG. 2 is an illustrative diagram showing the internal mechanism of the electrical device 1. The electrical device 1 includes ejection heads 12a and 12b that eject liquid (hereinafter, simply called the containers 5 when collectively referred to or when no distinction is made between them). In the present embodiment, the ejection head 12a is a printing head that performs printing by ejecting ink supplied from the container 5Bk onto a printing medium, and the ejection head 12b is a printing head that performs printing by ejecting ink supplied from the containers 5C to 5Y onto a printing medium. The ejection heads 12 each have an ejection face on which a plurality of nozzles for ejecting ink are formed. Each nozzle is provided with, for example, an electrothermal conversion element (heater), which is heated when supplied with power to cause the formation of bubbles in the ink, and the resulting bubbling energy causes the ink to be ejected.

The ejection heads 12 are mounted on a carriage 11. The carriage 11 is moved back and forth in the X direction (main scanning direction) by a drive unit 13. The drive unit 13 includes a drive pulley and a driven pulley (only the driven pulley 13b is shown in FIG. 2) that are spaced apart in the X direction, an endless belt 13c wound around the pulleys, and a carriage motor 13a serving as a drive source for rotating the drive pulley. The carriage 11 is coupled to the endless belt 13c, and the carriage 11 moves in the X direction when the endless belt 13c moves. As the carriage 11 moves, ink is ejected from the ejection heads 12 onto the printing medium, thereby printing an image. This operation is sometimes called print scanning.

As described above, the electrical device 1 of the present embodiment is a serial-type inkjet printing apparatus in which the ejection heads 12 are mounted on the carriage 11 that moves back and forth. However, the present invention can also be applied to other printing apparatuses, such as an inkjet printing apparatus that includes a "full line" head ejection head (printing head) provided with a plurality of nozzles that eject liquid over an area corresponding to the width of the printing medium.

The electrical device 1 includes a feeding unit 9 and a conveying unit 10 that convey the printing medium. The feeding unit 9 includes a feeding mechanism (not shown) that feeds the printing medium from the stacking portion 4 or a tray 7 onto which printing media are stacked. The feeding mechanism includes, for example, a feeding roller that feeds the printing medium, and a feeding motor serving as a drive source that rotates the feeding roller. The conveying unit 10 is a mechanism for conveying the printing medium fed from the feeding unit 9 in the Y direction (sub scanning direction). The conveying unit 10 includes a conveying roller 10a and a conveying motor serving as a drive source for rotating the conveying roller 10a. A pinch roller (not shown) is in pressure contact with the conveying roller 10a, and a printing medium is sandwiched in the nip region between them. The printing medium is intermittently conveyed toward the ejection head 12 by the rotation of the conveying roller 10a. The printing operation is performed by alternately repeating the printing medium conveying operation, which is performed by the conveying unit 10, and print scanning.

### <Control Unit>

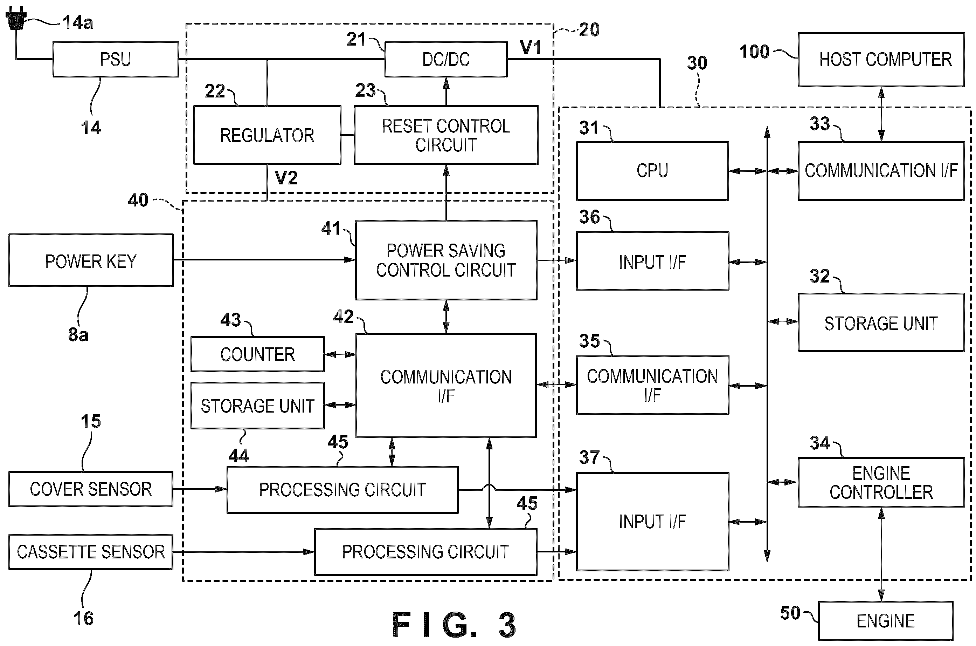

FIG. 3 is a block diagram of a control unit provided in the electrical device 1. The control unit is an electrical circuit that controls the electrical device 1. The control unit includes a power supply unit 20, a system control unit 30, and a power control unit 40.

The system control unit 30 is a control circuit (e.g., an ASIC) that performs overall control of the electrical device 1. The CPU 31 is a processor that, for example, controls operations of the electrical device 1 and controls the processing of data. The CPU 31 executes a program stored in a storage unit 32 to perform overall control of the electrical device 1. The storage unit 32 is constituted by a semiconductor memory (e.g., a ROM or a RAM). The storage unit 32 stores programs executed by the CPU 31 and various data required for processing, such data received from a host computer 100. An engine controller 34 includes, for example, a driver that controls an engine 50. The engine 50 includes components related to the printing operation (e.g., the ejection head 12, the feeding unit 9, the conveying unit 10, and various sensors).

The host computer 100 is, for example, a personal computer or a mobile terminal (such as a smartphone or tablet terminal) used by a user. A printer driver for performing communication between the host computer 100 and the electrical device 1 is installed in the host computer 100. The electrical device 1 includes a communication interface (communication I/F) 33, and communication between the host computer 100 and the CPU 31 is carried out via the communication I/F 33.

An input interface (input I/F) 36 has an input port to which a signal from a power control unit 41 is input, and in particular, to which a signal indicating a detection result regarding a user operation performed on the power key 8a is input. A communication interface (communication I/F) 35 performs data communication with a communication interface (communication I/F) 42 of the power control unit 41.

An input interface (input I/F) 37 has an input port to which a detection result from a cover sensor 15 is input, and an input port to which a detection result from a cassette sensor 16 is input. These detection results are input to the input I/F 37 via a processing circuit 45 provided for each sensor, and the processing circuits 45 are provided in the power control unit 40. The cover sensor 15 and the cassette sensor 16 are examples of sensors that detect a state of the electrical device 1, and the cover sensor 15 is a sensor that detects whether the cover 3 is in the open state or the closed state. The cassette sensor 16 is a sensor that detects the positional state (pulled out or mounted) of the stacking portion 4.

When a plug 14a is inserted into an electrical outlet, a power supply unit (PSU) 14 converts commercial AC voltage into a DC voltage used by the electrical device 1, such as 32 V or 24 V, and outputs the DC voltage to the power supply unit 20. The state in which the plug 14a has been inserted into an outlet and the PSU 14 has started supplying power is also referred to as a hard-on state.

The power supply unit 20 is a circuit that supplies power to the system control unit 30, and includes a DC/DC converter 21, a regulator 22, and a reset control circuit 23. The DC/DC converter 21 converts the DC voltage output from the PSU 14 into a predetermined DC voltage V1 and supplies the converted DC voltage to the system control unit 30. The regulator 22 converts the DC voltage output from the PSU 14 to a predetermined DC voltage V2 and supplies the converted DC voltage to the power control unit 40 and the reset control circuit 23.

The reset control circuit 23 is a circuit that switches between the output of the voltage V1 by the DC/DC converter 21 and stopping the output. Upon receiving a stop output instruction (called a reset instruction) from the power saving control circuit 41, the reset control circuit 23 stops the output of the voltage V1 from DC/DC converter 21 (called a reset state). Furthermore, when the power saving control circuit 41 receives an instruction to cancel the reset state, the reset control circuit 23 causes the DC/DC converter 21 to output the voltage V1.

The power control unit 40 operates while receiving power from the regulator 22, and controls the supply and interruption of power with regard to the system control unit 30 by the power supply unit 20. The power saving control circuit 41 controls the transmission of the reset instruction to the reset control circuit 23 and the cancellation of the reset instruction. In other words, the power state of the system control unit 30 is controlled by the power saving control circuit 41 of the power control unit 40, the power saving state is entered when a reset instruction is output, and the power supply state is entered when the reset state is cancelled.

In the present embodiment, the power saving state is a standby state in which the supply of power to the system control unit 30 is interrupted, and the power consumption of the system control unit 30 is zero. In the present embodiment, the power saving state is also called a soft-off state, and the power supply state in which a printing operation can be performed is also called a soft-on state. Note that the regulator 22 always outputs the voltage V2 as long as power is being supplied from the PSU 14, regardless of whether the regulator 22 is in the reset state or the reset state has been cancelled.

The power saving control circuit 41 receives an operation detection result pertaining to the power key 8a. The power saving control circuit 41 inputs the operation detection result pertaining to the power key 8a to the input I/F 36 of the system control unit 30. Therefore, in the soft-on state, the system control unit 30 can also recognize the operation state of the power key 8a.

During a hard-on (when the regulator 22 starts supplying the voltage V2), the power saving control circuit 41 controls the output of the reset instruction and the cancellation of the reset state based on the operation detection result pertaining to the power key 8a and a signal received from the system control unit 30 via the communication I/F 42.

The power control unit 40 also includes a counter 43, a storage unit 44, and a processing circuit 45. The counter 43 is capable of counting time. The counter 43 has a slow clock that can count, for example, once every 50 milliseconds, and by counting the clock signal, it is possible to, for example, measure time with low power consumption in the soft-off state. The storage unit 44 can hold a specific value depending on the operation of the electrical device 1. The storage unit 44 is configured with a circuit having the minimum necessary storage area, such as a flip-flop. This allows the value to be held with low power consumption in the soft-off state, for example. The count value of the counter 43 and the value held in the storage unit 44 can be acquired by the system control unit 30 via the communication I/F 42.

The processing circuit 45 is a circuit that has a function of outputting the detection result of the corresponding sensor (the cover sensor 15 or the cassette sensor 16) to the system control unit 30, and also has a function of holding the detection result. For example, in the soft-off state, the detection result is held in the processing circuit 45, and in the soft-on state, the system control unit 30 acquires the held detection information. Accordingly, the state of the electrical device 1 in the soft-off state can be recognized by the system control unit 30 in the soft-on state. In the present embodiment, a plurality of processing circuits 45 and sensors are provided.

In the present embodiment, power consumption is reduced by cutting off the supply of power to the system control unit 30 in the soft-off state. Meanwhile, the power state of the system control unit 30 can be controlled by the power control unit 40, which is configured with a relatively small-scale circuit. This allows the electrical device 1 to achieve necessary functions while also significantly reducing power consumption.

In the present embodiment, even in the soft-off state, power is supplied to the communication I/F 42, but power is not supplied to the system control unit 30 that is the communication partner, and therefore communication is not performed. Therefore, a configuration may be adopted in which power is not supplied to the communication I/F 42 in the soft-off state.

### <Power State Transition Examples>

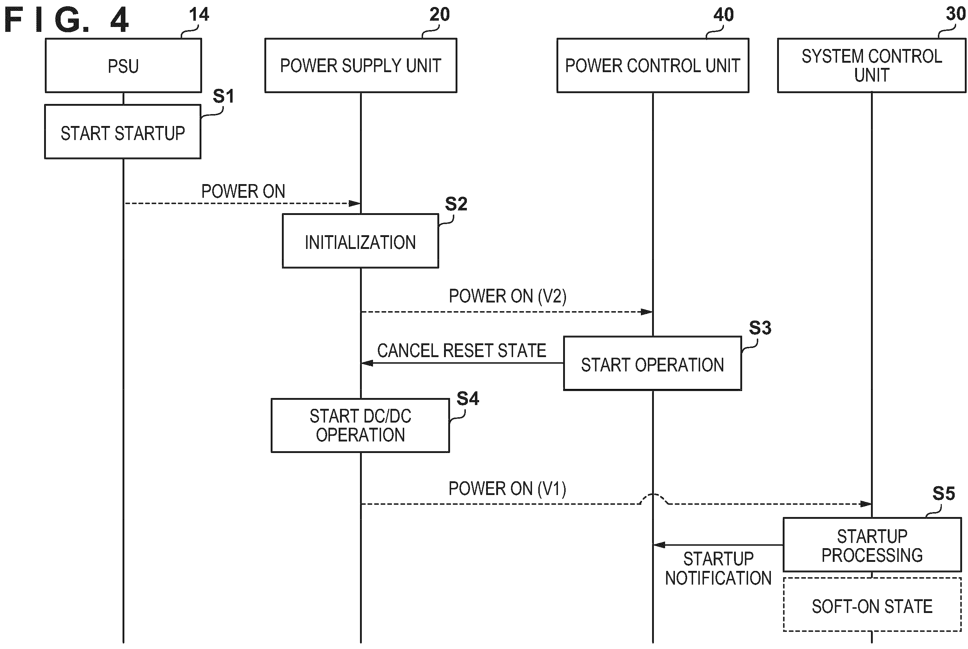

Examples of power state transitions and operations of the system control unit 30 will be described below with reference to FIGS. 4 to 6. FIG. 4 shows an example of operations (a start-up sequence) of the PSU 14, the power supply unit 20, the power control unit 40, and the system control unit 30 during a hard-on. Operations similar to those shown in FIG. 4 are also performed when commercial power is restored after a power outage.

The PSU 14 starts generating the power voltage used by the electrical device 1 (step S1). The DC voltage generated by the PSU 14 is supplied to the power supply unit 20 (power on). The power supply unit 20 is initialized, and the regulator 22 starts outputting the DC voltage V2 (step S2). The DC voltage V2 is supplied to the power control unit 40 (power on (V2)). The power control unit 40 starts operating (step S3), and an internal reset of the power control unit 40 is performed. The power saving control circuit 41 cancels the reset state of the reset control circuit 23 of the power supply unit 20.

When the reset state is cancelled, the reset control circuit 23 causes the DC/DC converter 21 to start operating (step S4). The DC voltage V1 is supplied from the DC/DC converter 21 to the system control unit 30 (power on (V1)). The CPU 31 of the system control unit 30 executes startup processing in accordance with a program stored in the storage unit 32 (step S5). When the startup is complete, the system control unit 30 transmits a startup notification to the power control unit 40. In the power control unit 40, processing related to the startup of the system control unit 30 is executed.

Thereafter, when the system control unit 30 detects, for example, a power-on operation pertaining to the power key 8a, the system control unit 30 transitions to the soft-on state. The period from when the DC voltage V1 is supplied to the system control unit 30 until the transition to the soft-on state is sometimes referred to as a standby state. As another example of processing, for example, information set in advance by the user and stored in the storage unit 32 may be read out, and a selection may be made as to whether to set the soft-on state or the soft-off state.

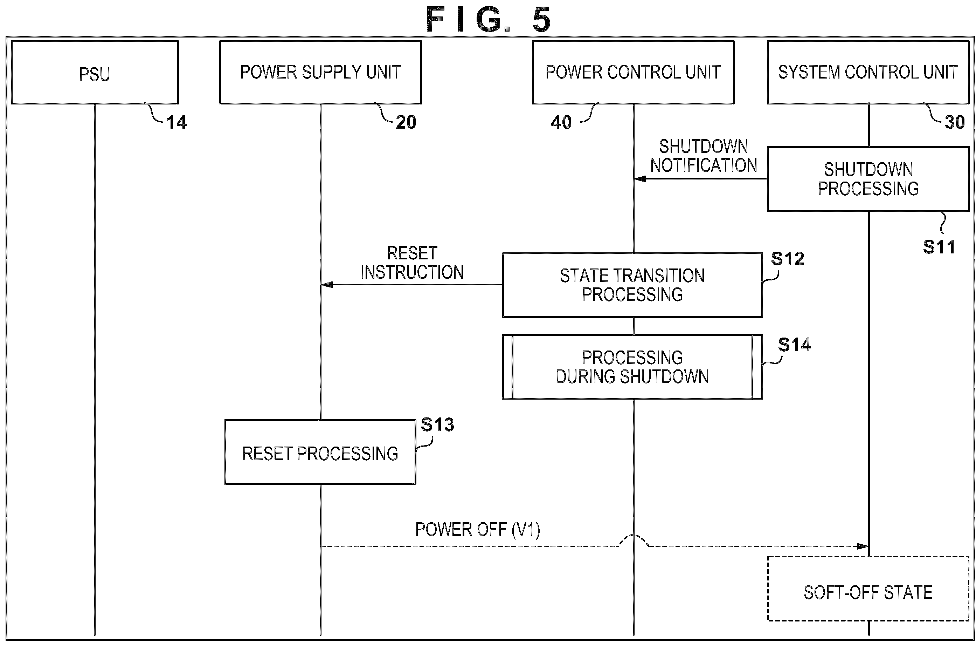

Next, a case where the user performs a power-off operation on the power key 8a in the soft-on state will be described with reference to FIG. 5.

When it is detected that a power-off operation was performed on the power key 8a in the soft-on state, it is then determined that the user has requested shutdown of the electrical device 1, and the system control unit 30 starts shutdown processing (step S11). Shutdown processing is processing in which the system control unit 30 prepares for the interrupt of the power supply. When shutdown processing is completed, the system control unit 30 transmits a shutdown notification to the electric control unit 40 via the communication I/F 35.

When the stop control unit 40 receives the shutdown notification, the power saving control circuit 41 issues a reset instruction to the power supply unit 20 as state transition processing (step S12). In response to the reset instruction, the reset control circuit 23 of the power supply unit 20 performs reset processing to stop the operation of the DC/DC converter 21 (step S13). The supply of the DC voltage V1 from the DC/DC converter 21 to the system control unit 30 is stopped (power off (V1)). The system control unit 30 transitions to the soft-off state.

Note that in the illustrated example, the system control unit 30 is caused to transition to the soft-off state on the condition that a power-off operation was performed on the power key 8a. However, similar operations may be performed when another condition is satisfied. For example, a configuration is possible in which a soft-off time is set, and when the set time arrives, the system control unit 30 transitions to the soft-off state by the operation in FIG. 5. As another example, the condition may be that no processing request has been received from the user for a certain period of time.

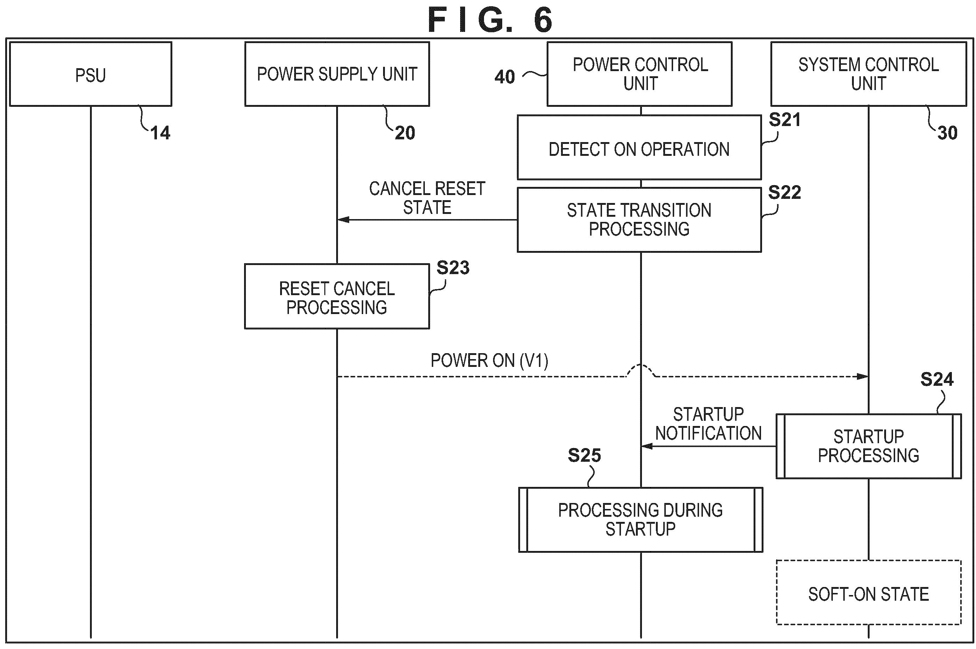

Next, a case where the user performs a power-on operation on the power key 8a in the soft-off state will be described with reference to FIG. 6. Since the system control unit 30 is stopped, the power-on operation is recognized by the power control unit 40 (power saving control circuit 42) (step S21). The power control unit 40 instructs the reset control circuit 23 to cancel the reset state, as state transition processing (step S22). The reset control circuit 23 of the power supply unit 20 performs reset cancel processing and causes the DC/DC converter 21 to start operating. Power is supplied from the DC/DC converter 21 to the system control unit 30 (power on (V1)).

When power is supplied, the CPU 31 of the system control unit 30 executes startup processing in accordance with a program stored in the storage unit 32 (step S24). When the startup is complete, the system control unit 30 transmits a startup notification to the power control unit 40. The system control unit 30 transitions to the soft-on state. In the power control unit 40, processing related to the startup of the system control unit 30 is executed (step S25).

### <Sensor Signal Processing>

When the stacking portion 4 is pulled out or pushed in, it is possible that the type of printing medium was changed. For example, the type of printing medium may be changed from plain paper to glossy paper. When the type of printing medium is changed, it may be necessary to change a printing condition, such as ink ejection or the conveying of the printing medium. Therefore, when the cassette sensor 16 detects that an operation was performed on the stacking portion 4, the system control unit 30 inquires of the user about the new type of printing medium, and executes processing to set the type of printing medium specified by the user. Furthermore, when the cover 3 is opened and closed, there is a possibility that the user performed an operation inside the apparatus body 2, such as ink replenishment. In such a case, the remaining amount of ink changes, and therefore when the cover sensor 15 detects that an operation was performed on the stacking portion 4, the system control unit 30 executes processing to detect the remaining amount of ink.

However, if such a user operation is performed during the soft-off state, the system control unit 30 cannot recognize the operation in real time. In the present embodiment, by providing the processing circuit 45, when there is a transition from the soft-off state to the soft-on state, the system control unit 30 can obtain detection results that were obtained by the cover sensor 15 and the cassette sensor 16 in the soft-off state.

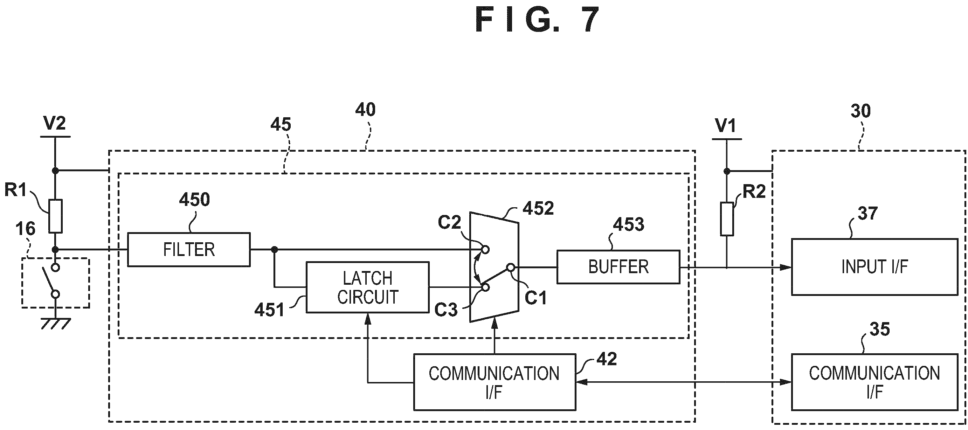

FIG. 7 is a block diagram of the processing circuit 45. Although the illustrated example shows the processing circuit 45 corresponding to the cassette sensor 16, the processing circuit 45 corresponding to the cover sensor 15 also has a similar configuration.

The cassette sensor 16 is a switch-type sensor to which the DC voltage V2 output from the regulator 22 is applied via a pull-up resistor R1. When the stacking portion 4 is mounted in the apparatus body 2 and is capable of feeding the printing medium, the cassette sensor 16 outputs a high level voltage (V2) as a signal indicating the detection result (also called a detection signal). Furthermore, when the stacking portion 4 has been pulled out from the apparatus body 2, the cassette sensor 16 outputs a low level voltage (0V) as the detection signal. Even in the soft-off state, the regulator 22 outputs the DC voltage V2, and thus the cassette sensor 16 operates.

The processing circuit 45 includes a filter 450, a latch circuit 451, a switching circuit 452, and an open-drain buffer 453. Noise in the detection signal of the cassette sensor 16 is removed by the filter 450, and the resulting signal is then input to the latch circuit 451 and the switching circuit 452.

The latch circuit 451 is a holding circuit (data latch circuit) that holds the detection result of the cassette sensor 16, and the held detection result will be called detection information. The output of the latch circuit 451 is at the high level as an initial value, and when a low level detection signal is input as the detection signal, the input is latched, and the output is changed to the low level. The output is then maintained at the low level until a reset is performed. For example, when the cassette sensor 16 detects that the stacking portion 4 has been pulled out, a low level signal is input to the latch circuit 451, and the output of the latch circuit 451 changes to the low level. When the stacking portion 4 is mounted in the apparatus body 2, the detection signal of the cassette sensor 16 changes to the high level, but the output of the latch circuit 451 is maintained at the low level until a reset is performed. Note that the logical relationship between the high level and the low level may be reversed, and can be determined according to the characteristics of the detection target.

The switching circuit 452 is a selector that switches the input information to be input to the system control unit 30 between the detection result output from the cassette sensor 16 (in other words, the real-time detection result) and the detection information held in the latch circuit 451. The switching circuit 452 has two input terminals C2 and C3, and one output terminal C1. The connection state of the switching circuit 452 is switched between a state in which the output terminal C1 and the input terminal C2 are connected, and a state in which the output terminal C1 and the input terminal C3 are connected. FIG. 7 shows a state in which the output terminal C1 and the input terminal C3 are connected.

The detection result of the cassette sensor 16 is input to the input terminal C2 without passing through the latch circuit 451. The detection information held in the latch circuit 451 is input to the input terminal C3.

The output terminal C1 is connected to a predetermined input port of the input I/F 37 via the buffer 453. The DC voltage V1 is applied to the wiring between the buffer 453 and the input I/F 37 via the pull-up resistor R2. When the signal output from the buffer 453 is at the high level, the input information input to the input I/F 37 changes to the high level, and when the signal is at the low level, the input information changes to the low level. In this configuration, the input information is at the high level only in a power state in which the DC voltage V1 is supplied to the system control unit 30 in the soft-on state.

The clearing of the latch circuit 451 and the switching of the connection state of the switching circuit 452 are controlled by the startup notification and the shutdown notification output from the communication I/F 35 of the system control unit 30. The startup notification and the shutdown notification may, for example, be in the form of a state signal that changes between a high level and a low level. The communication I/F 42 recognizes the timing when the state signal rises to the high level as the startup notification, and switches the connection state of the switching circuit 452 to a state in which the output terminal C1 and the input terminal C2 are connected. Also, the communication I/F 42 recognizes the timing when the state signal falls to the low level as the shutdown notification, and switches the connection state of the switching circuit 452 to a state in which the output terminal C1 and the input terminal C3 are connected, and also clears the latch circuit 451.

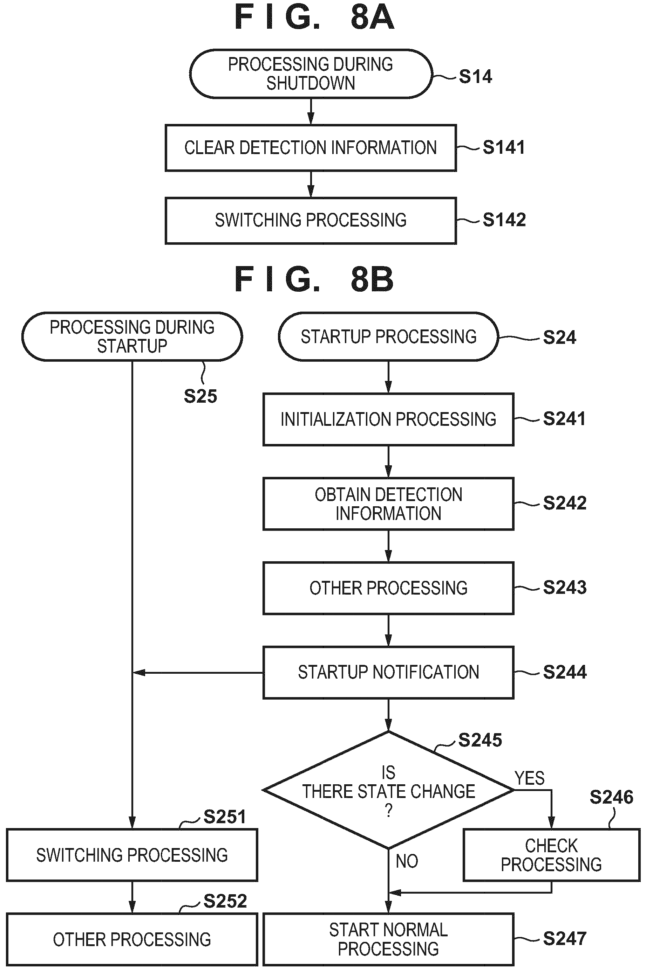

FIG. 8A shows an example of processing during shutdown in step S14 of FIG. 5, and shows an example of processing performed by the communication I/F 42 that has received the shutdown notification from the system control unit 30. In step S141, the communication I/F 42 outputs a clear signal to the latch circuit 45 of each processing circuit 45, and the detection information held in the latch circuit 451 is cleared. The detection information is at high level as the initial value. In step S142, the communication I/F 42 outputs a switching signal to the switching circuit 452 of each processing circuit 45, and the connection state of the switching circuit 452 is set to a state in which the output terminal C1 and the input terminal C3 are connected. In other words, the detection information is selected as the input information to be input to the input I/F 37. According to this processing, during the soft-off state, the detection results of the cover sensor 15 and the cassette sensor 16 are held in the latch circuit 45 of the corresponding processing circuit 45, and the output terminal C1 of the switching circuit 452 is in a state for outputting the detection information.

FIG. 8B shows an example of the startup processing of step S24 in FIG. 6, and processing performed during startup of step S25. The startup processing in step S24 will now be described. The CPU 31 of the system control unit 30 executes predetermined initialization processing in step S241. In step S242, the detection information of the cover sensor 15 and the cassette sensor 16 is obtained from the input I/F 37. In step S243, other processing defined to be performed at the time of startup is executed, and the startup is completed. In step S244, the startup notification is transmitted to the power control unit 40 via the communication I/F 35. In step S245, it is determined, based on the detection information acquired in step S242, whether or not a state change occurred in the electrical device 1 (opening of the cover 3, pulling out of the stacking portion 4) in the soft-off state. If it is determined that a state change has occurred, check processing is performed in step S246. In the check processing, for example, if the cover 3 was opened, the remaining amount of ink is detected, whereas if the stacking portion 4 was pulled out, the user is inquired about the type of printing medium that was loaded. If it is determined that a state change did not occur, the processing moves to step S247, in which normal processing is started and the printing operation can be performed.

The processing during startup of step S25 will now be described. In the power control unit 40, the communication I/F 42 that received the startup notification outputs a switching signal to the switching circuit 452 of each processing circuit 45 in step S251, and the connection state of the switching circuit 452 is set to a state in which the output terminal C1 and the input terminal C2 are connected. In other words, rather than the detection information being selected, the real-time detection results of the cover sensor 15 and the cassette sensor 16 are selected as the input information to be input to the input I/F 37. According to this processing, during the soft-on state, the system control unit 30 can obtain real-time detection results from the cover sensor 15 and the cassette sensor 16. If a state change has occurred, for example, processing similar to the check processing of step S246 is performed. In step S252, other processing defined to be performed when the system control unit 30 is started up is executed.

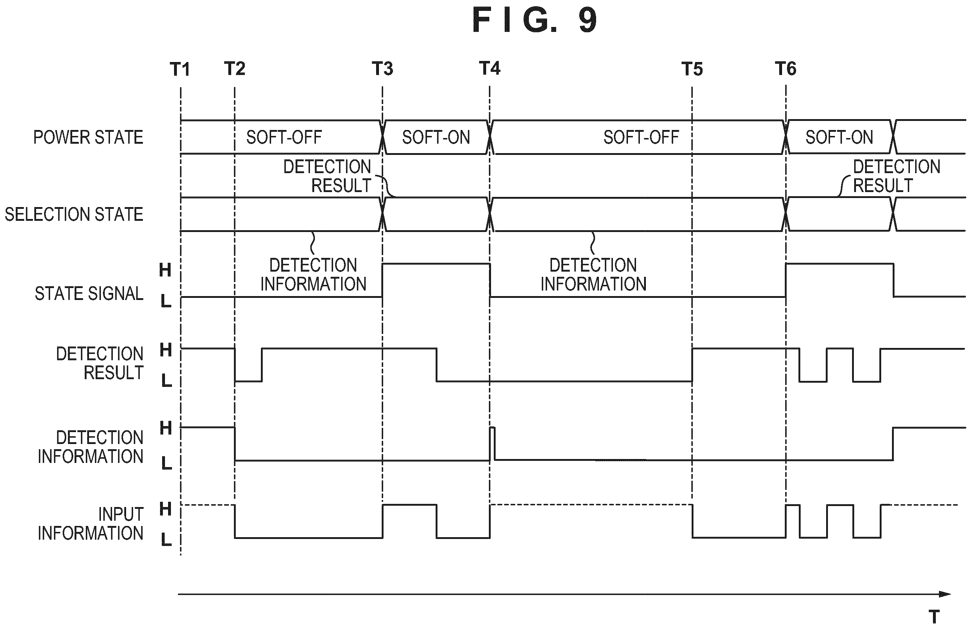

FIG. 9 is a timing chart showing changes in detection results, the detection information, and the input information. "Power state" indicates the power state of the system control unit 30 and indicates the transition between the soft-on state and the soft-off state. "Selection state" indicates the connection state of the switching circuit 452, and in particular indicates whether the output of the output terminal C1 is detection information or a detection result. "State signal" is the state signal output from the system control unit 30 to the power control unit 40, and represents the startup notification (rising edge) or the shutdown notification (falling edge). "Detection result" indicates the detection result of the sensor (the cover sensor 15 or the cassette sensor 16), and "detection information" indicates the detection result held in the latch circuit 451. "Input information" represents the information input to the input I/F.

At a time T1, the power state is the soft-off state. The selection state is detection information. The detection information is at the high level corresponding to the detection result. At a time T2, the detection result changes to the low level in the soft-off state. The detection information changes to the low level, and then the detection result returns to the high level, but the detection information is maintained at the low level. At a time T3, power is supplied to system control unit 30, and the power state changes to the soft-on state. At that time, the system control unit 30 acquires the detection information as the input information, and then the selection state switches to the detection result. The input information changes to the detection result, and the input information also changes according to the change in the detection result.

At a time T4, the power state of the system control unit 30 switches to the soft-off state. At that time, the selection state changes to the detection state, and the detection information is reset to the high level. However, since the detection result is at the low level, the detection information is also immediately set to the low level. At a time T5, the detection result changes to the high level, but the detection information remains at the low level. At a time T6, power is supplied to the system control unit 30, and the power state changes to the soft-on state. At that time, the system control unit 30 acquires the detection information as the input information, and then the selection state switches to the detection result. The input information changes to the detection result, and the input information also changes according to the change in the detection result. This similarly applies onward.

As described above, according to the present embodiment, the system control unit 30 is configured such that to the detection results obtained by the sensors in the soft-off state are acquired when the power state transitions to the soft-on state. In the soft-off state, the system control unit 30 does not consume the amount of power required for monitoring the detection results of the sensors, and therefore the power consumption can be reduced while also allowing the detection results of the sensors to be reflected.

### <Other Embodiments>

In the above embodiment, the cover sensor 15 and the cassette sensor 16 are illustrated as examples of the components whose detection results are held in the soft-off state, but the type of sensor (the monitoring target) is not limited to this. Furthermore, the number of sensors is not limited to two, and may be one, or three or more.

In the above embodiment, an inkjet printing apparatus is illustrated as an example of an electrical device, but the present invention can also be applied to other electrical devices. For example, in the case of application to an air cleaner, a sensor may be provided on a cover for holding a filter, and the detection result of that sensor may be held in the soft-off state. If it is detected that the cover has been opened in the soft-off state, when the state transitions to the soft-on state, the user may be given a notification message to confirm whether or not the filter has been replaced.

In the above embodiment, the power supply unit 20 and the power control unit 40 are configured as separate ICs, but they may also be configured as a single IC.

In the above embodiment, the supply of power to the system control unit 30 is interrupted in the soft-off state, but power may be supplied within a range that results in lower power consumption than in the soft-on state. Also, in the above embodiment, there is one type of soft-on state, but the soft-on state may further have two types, namely a normal power supply state and a power saving state.

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

While an embodiment has been described, the invention is not limited to the foregoing embodiments, and various variations/changes are possible within the spirit of the invention. Therefore, to apprise the public of the scope of the present invention, the following claims are made.

This application claims priority from Japanese Patent Application No. 2022-147210, filed on September 15, 2022, which is hereby incorporated by reference herein.

### REFERENCE SIGNS LIST

- 1: Electrical device
- 12a: Ejection head
- 12b: Ejection head
- 15: Cover sensor
- 16: Cassette sensor
- 30: System control unit
- 451: Latch circuit

## Claims

1. An electrical device comprising:
detecting means for detecting a state of the electrical device;
controlling means for acquiring a detection result of the detecting means and executing control based on the detection result; and
holding means for holding the detection result of the detecting means as detection information,
wherein a power state of the controlling means includes a first state and a second state in which power consumption is higher than in the first state, and
the controlling means acquires the detection result in the second state and does not acquire the detection result in the first state, and in a case where the power state transitioned from the first state to the second state, the controlling means acquires the detection information stored in the holding means in the first state.

2. The electrical device according to claim 1, wherein
in a case where the power state transitions from the second state to the first state, the detection information of the holding means is cleared.

3. The electrical device according to claim 1, further comprising:
switching means for switching input information, which is to be input to an input port of the controlling means, between the detection result of the detecting means and the detection information of the holding means,
wherein in a case where the power state transitions from the second state to the first state, the switching means switches the input information to the detection information, and
in a case where the power state transitioned from the first state to the second state, the switching means switches the input information to the detection result after the controlling means acquires the detection information held in the holding means.

4. The electrical device according to claim 1, wherein
the detection result indicates a first detection result or a second detection result as the state, and
in a case where the detection result becomes the second detection result, even if the detection result subsequently becomes the first detection result, the holding means holds the second detection result as the detection information.

5. The electrical device according to claim 1, comprising a plurality of detecting means, and a plurality of holding means.

6. The electrical device according to claim 1, wherein
the first state is a state in which power is not supplied to the controlling means.

7. The electrical device according to claim 6, further comprising:
power supplying means for supplying power to the controlling means; and
power controlling means for receiving power from the power supplying means and controlling supply and interruption of power with regard to the controlling means by the power supplying means.

8. The electrical device according to claim 7, wherein
the power controlling means causes power to be supplied to the controlling means by the power supplying means based on a power-on instruction from a user, and
the power controlling means causes the supply of power to the control means by the power supplying means to be interrupted based on a power-off instruction from the user.

9. The electrical device according to claim 1, wherein
the detecting means detects a state of a movable portion operable by a user.

10. The electrical device according to claim 1, wherein
the electrical device is a printing apparatus configured to perform printing by ejecting a liquid onto a printing medium.

11. The electrical device according to claim 10, wherein
the printing apparatus includes:
a body; and
a cover configured to be openable and closeable, and configured to cover the body, and
the detecting means detects an open/closed state of the cover.

12. The electrical device according to claim 10, wherein
the printing apparatus includes:
a body; and
a stacking portion, on which the printing medium is stacked, configured to be pulled out from the body, and
the detecting means detects pulling out of the stacking portion.
